# EUROPEAN PATENT SPECIFICATION

(11) **EP 3 093 955 B1**
(45) Date of publication and mention of the grant of the patent: **03.04.2019**
(21) Application number: 16169360.1
(22) Date of filing: 12.05.2016
(51) Int. Cl.: H02J 50/10

(54) **METHOD FOR TRANSFERRING POWER FROM A WIRELESS POWER OUTLET TO A WIRELESS POWER RECEIVER AND CONTROL CIRCUIT FOR A WIRELESS POWER OUTLET**
VERFAHREN ZUR ÜBERTRAGUNG VON STROM VON EINER DRAHTLOSEN STECKDOSE ZU EINEM DRAHTLOSEN STROMEMPFÄNGER UND STEUERUNGSSCHALTUNG FÜR EINE DRAHTLOSE STECKDOSE
PROCÉDÉ POUR TRANSFÉRER DE L'ÉNERGIE À PARTIR D'UNE SORTIE DE PUISSANCE SANS FIL À UN RÉCEPTEUR D'ÉNERGIE SANS FIL ET CIRCUIT DE COMMANDE DESTINÉ À UNE SORTIE DE PUISSANCE SANS FIL

(30) Priority: 12.05.2015 US 201562159989 P
(43) Date of publication of application: 16.11.2016
(73) Proprietor: Powermat Technologies Ltd., 90850 Neve Ilan (IL)
(72) Inventor: MACH, Elieser, 90938 Rosh Tzurim (IL); MOSHKOVICH, Oz, 76452 Rehovot (IL); PODKAMIEN, Ian, 49063 Petach Tikva (IL); RAVEH, Guy, 99870 Mataa (IL); KOREN, Yuval, 76666 Rehovot (IL); GREENWALD, Oola, 90805 Mevasseret Zion (IL); GLUZMAN, Ilya, 58670 Holon (IL)
(74) Representative: Beck & Rössig European Patent Attorneys

(56) References cited:
- EP-A2- 2 615 717
- EP-A2- 2 800 422
- US-A1- 2012 293 900
- US-A1- 2014 077 614

## Description

The invention relates to a method for transferring power from a wireless power outlet to a wireless power receiver and to control circuit for a wireless power outlet configured to transfer power to a wireless power receiver.

In wireless charging systems, power is transferred from a wireless power outlet, or power transmitter, to a wireless power receiver. Such systems are e.g. known from US 2012/0293900 A1, EP 2 800 422 A2, EP 2 615 717 A2 and US 2014/0077614 A1.

Protection mechanisms are often included in both the wireless power transmitter and the wireless power receiver. Because wireless power outlets control the level of power transmitted to wireless power receivers remotely, wireless power receivers often include over voltage protection mechanisms (OVPs) which can limit voltage to limit power transfer under certain conditions in order to prevent damage to the receivers. Examples for over voltage protection mechanisms for wireless power transmission can be found e.g. in EP 2 615 717 A2 and US 2012/0293900 A1.

During an ongoing power transmission session feedback control signals may be passed from the wireless power receiver to the wireless power transmitter to regulate the power transferred. However, during the initiation phase during which a connection is being established between the wireless power receiver and the wireless power transmitter, the feedback channel used for regulation may not be available. Accordingly, the power transmitter may transmit power at a predefined power level.

During the unregulated power transmission phase, the power transmitted may be insufficient for certain receivers which have poor power coupling however in other cases the power transmitted may be too energetic for receivers with better power coupling. When a receiver receives power with excessively high power levels, the over voltage protection mechanism (OVP) may be activated.

OVP activation may therefore interfere with the initiation phase thereby delaying or preventing the establishment of the feedback channel between the wireless power receiver and the wireless power outlet.

There is a need for a wireless power transfer system and method enabling a wireless power outlet to respond to the activation of an over voltage protection mechanism by a wireless power receiver. The present disclosure addresses this need.

In this sense, there is provided a method comprising the features of claim 1 and a control circuit comprising the features of claim 13. Advantageous embodiments are indicated in further claims.

Where appropriate, the frequency driver of the control circuit may be operable to transmit at least a first-type ping signal and a second-type ping signal at a lower energy than the first-type ping signal. Accordingly, the frequency driver may be operable to transmit the second-type ping signal when the OVP detection mechanism detects that the over voltage protection mechanism is activated in the wireless power receiver during transmission of the first-type ping signal.

According to some embodiments of the control circuit the OVP detection mechanism comprises a magnitude detector operable to monitor at least one transmission parameter of the first type ping signal. Additionally or alternatively, the OVP detection mechanism of the control circuit of comprises a data signal receiver operable to receive data signals sent from the wireless power receiver. The data signal receiver may be an in-band or an out-of-band receiver as required.

Accordingly, where appropriate, subsequent to the detecting that the wireless power receiver has activated the over voltage protection mechanism, the wireless power outlet may transmit a second-type ping signal. The second-type ping signal is typically a lower energy signal than the first-type ping signal.

Variously, the wireless power outlet transmitting the first-type ping signal involves a frequency generator providing a driving voltage across a primary coil of the wireless power outlet. Accordingly, the wireless power outlet transmitting the first-type ping signal may involve the frequency generator providing a driving voltage across a primary coil of the wireless power outlet at a first operating frequency, and the wireless power outlet transmitting the second-type ping signal may involve the frequency generator providing the driving voltage across the primary coil of the wireless power outlet at a second operating frequency. Where the second operating frequency produces a lower voltage response, the second-type ping signal may be of lower energy than the first-type ping signal.

Alternatively, or additionally, the wireless power outlet transmitting the first-type ping signal may involve providing a driving voltage across a primary coil of the wireless power outlet at a first amplitude, and the wireless power outlet transmitting a second-type ping signal comprises may involve providing a driving voltage across the primary coil of the wireless power outlet at a second amplitude. Where the second amplitude is lower than the first amplitude, the second-type ping signal may be of lower energy than the first-type ping signal.

In still other examples of the method, the wireless power outlet transmitting the first-type ping signal comprises providing a driving voltage across a primary coil of the wireless power outlet with a first duty cycle; and the wireless power outlet transmitting a second-type ping signal comprises providing a driving voltage across the primary coil of the wireless power outlet with a second duty cycle. In this manner the second-type ping signal may be of lower energy than the first-type ping signal.

It is noted that the frequency modulation, amplitude modulation and the duty cycle modulation may be used either separately or in combination as required.

Where appropriate, the wireless power outlet detecting that the wireless power receiver has activated the over voltage protection mechanism comprises an over voltage protection (OVP) detection mechanism detecting a characteristic variation in at least one transmission parameter during transmission of the first-type ping signal.

Variously, the at least one transmission parameter is selected from a group consisting of: amplitude of a primary voltage signal across a primary coil of the wireless power outlet; amplitude of a primary current signal through the primary coil; phase difference between the primary voltage signal and the primary current signal; voltage; and a temperature increase associated with the wireless power receiver;
Additionally, or alternatively, the wireless power outlet detecting that the wireless power receiver has activated the over voltage protection mechanism comprises an OVP detection mechanism detecting a periodic interference on a primary coil of the wireless power outlet.

In some examples of the method, subsequent to the wireless power receiver activating the over voltage protection mechanism, the wireless power receiver may send a data signal to the wireless power outlet indicating that the voltage protection mechanism has been activated.

Where appropriate, subsequent to the detecting that the wireless power receiver has activated the over voltage protection mechanism, the wireless power outlet may indicate that the wireless power receiver is misaligned. Additionally or alternatively, subsequent to the detecting that the wireless power receiver has activated the over voltage protection mechanism, the wireless power outlet indicating that a foreign object is disrupting power transfer.

It is noted that the term 'misaligned' as used herein may refer to a wireless power receiver positioned relative to the wireless power outlet in any orientation other than the optimal orientation. The optimal orientation may be a point of maximal transmitted energy. In particularly, the optimal orientation may be with the maximal effective coupling factor. Alternatively, the optimal orientation may be a point of less than maximal transmitted energy, for example to prevent activation of the OVP.

Optionally, subsequent to the detecting that the wireless power receiver has activated the over voltage protection mechanism, the wireless power outlet may send an alert signal directly or indirectly to the wireless power receiver. Accordingly, the wireless power receiver may alter its power requirements in response to the alert signal.

It is noted that the term 'resonant frequency' or 'effective resonant frequency' as used herein refers to the frequency of the peak value of a plot of a variable against frequency. It is particularly noted that the resonant frequency effectively increases as a resonant system is damped.

It is noted that in order to implement the methods or systems of the disclosure, various tasks may be performed or completed manually, automatically, or combinations thereof. Moreover, according to selected instrumentation and equipment of particular embodiments of the methods or systems of the disclosure, some tasks may be implemented by hardware, software, firmware or combinations thereof using an operating system. For example, hardware may be implemented as a chip or a circuit such as an ASIC, integrated circuit or the like. As software, selected tasks according to embodiments of the disclosure may be implemented as a plurality of software instructions being executed by a computing device using any suitable operating system.

In various embodiments of the disclosure, one or more tasks as described herein may be performed by a data processor, such as a computing platform or distributed computing system for executing a plurality of instructions. Optionally, the data processor includes or accesses a volatile memory for storing instructions, data or the like. Additionally or alternatively, the data processor may access a non-volatile storage, for example, a magnetic hard-disk, flash-drive, removable media or the like, for storing instructions and/or data. Optionally, a network connection may additionally or alternatively be provided. User interface devices may be provided such as visual displays, audio output devices, tactile outputs and the like. Furthermore, as required, user input devices may be provided such as keyboards, cameras, microphones, accelerometers, motion detectors or pointing devices such as mice, roller balls, touch pads, touch sensitive screens or the like.

For a better understanding of the embodiments and to show how it may be carried into effect, reference will now be made, purely by way of example, to the accompanying drawings.

With specific reference now to the drawings in detail, it is stressed that the particulars shown are by way of example and for purposes of illustrative discussion of selected embodiments only, and are presented in the cause of providing what is believed to be the most useful and readily understood description of the principles and conceptual aspects. In this regard, no attempt is made to show structural details in more detail than is necessary for a fundamental understanding; the description taken with the drawings making apparent to those skilled in the art how the several selected embodiments may be put into practice. In the accompanying drawings:
Fig. 1A is block diagram schematically representing selected elements of a wireless power transfer system incorporating an over voltage protection mechanism and an over voltage protection mechanism detector according to examples of the system disclosed herein;
Fig. 1B is a block diagram showing the main elements of a wireless power transfer system with a feedback signal path according to various embodiments of the system disclosed herein;
Fig. 2A is a schematic representation representing selected components of an embodiments of the wireless power transfer system;
Fig. 2B is a block diagram of selected elements of a wireless power transmitter;
Fig. 2C is a block diagram of selected elements of a wireless power receiver;
Figs 3A and 3B are illustrations of state machines for respectively a wireless transmitter and a wireless receiver;
Fig. 4 is a flowchart illustrating selected actions in a possible method for initiating the transfer of power from a wireless power outlet to a wireless power receiver in an improved manner using an over voltage protection mechanism detector as disclosed herein;
Fig. 5A is a flowchart representing selected stages of another possible protocol for transition from standby phase to the transmission phase in the inductive power outlet of an energy efficient inductive power outlet;
Fig. 5B is a flowchart representing a possible transmission mode protocol for an inductive power outlet; and
Fig. 5C is a flowchart representing operation of an energy efficient inductive power receiver;

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

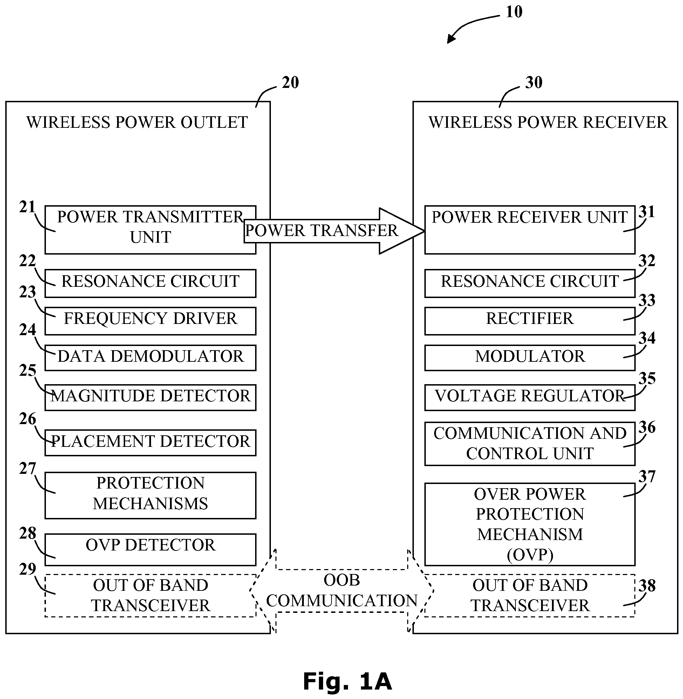

Reference is now made to Fig. 1A showing a block diagram of main elements of a wireless power transfer system 10 according to embodiments of the current disclosure. The wireless power transfer system 10 includes a wireless power outlet 20 and a wireless power receiver 30.

It is particularly noted that in embodiments of the wireless power transfer system 10, the wireless power receiver 30 may include an over voltage protection mechanism (OVP) 37 and the wireless power outlet 20 may include an OVP detector 28 operable to detect when the OVP 37 is activated by the wireless power receiver.

The wireless power outlet 20 includes a power transmitter unit 21, a resonance circuit 22, a frequency driver 23, a data demodulator 24, a magnitude detector 25, a placement detector 26, various protection mechanisms 27, an OVP detector 28 and where appropriate an out-of-band transceiver 29.

The frequency driver 23 may be used to drive an oscillating voltage in the resonant circuit 22, thereby transmitting power via the power transmitter unit 21. The power transmitter unit 21 may comprise an induction coil, an antenna or the like operable to transfer power to one or more corresponding power receiver unit 31.

The magnitude detector 25 may be used to monitor the values of transmission parameters such as voltage, current, duty cycle, transmission frequency, temperature and the like.

The data demodulator 24 may be used to filter modulated transmission parameters thereby isolating data signals communicated from the wireless power receiver 30 to the wireless power outlet 20 via an in-band communication channel. In-band communication channels, such as modulated power carrying signals encoding data or power control signals, are described in the applicants co-pending applications US20150288217 and US20150249484, which are incorporated herein by reference in their entirety.

Alternatively or additionally to the in-band communication channel, the wireless power transfer system may further include an out-of-band communication channel (OOB). The out-of-band communication channel may allow communication between the wireless power receiver 30 and the wireless power outlet 20 independently of the coupling state of the power transmitter unit 21 and the power receiver unit 31.

Accordingly, where required, the wireless power outlet 20 may incorporate an out-of-band transceiver 29 which may communicate with a corresponding receiver-side out-of-band transceiver 38.

Various out-of-band transceivers may be used with the power transfer system using various protocols. For example, transceivers may transfer signals such as radio signals, near-field communication signals, Bluetooth signals, Bluetooth low energy (BLE) signals, WiFi signals, Zigbee signals. In other examples the transceiver may create an audio channel transmitting and receiving sound waves, possibly in the audio range, the ultrasonic range or infrasonic range as required.

The wireless power receiver 30 includes a power receiver unit 31, a resonance circuit 32, a rectifier 33, a modulator 34, a voltage regulator 35, a communication and control unit 36, an over power protection mechanism (OVP) 37, and required a out-of-band transceiver 38.

The power receiver unit 31 and receiver-side resonance circuit 32 are operable to receive power transferred from the wireless power outlet 20. The received power is generally rectified by a rectifier 33 before being transferred to a load such as for charging an electrochemical cell or the like.

The voltage regulator 35 may be used to monitor and regulate the output voltage induced in the power receiver unit 31. The communication and control unit 36 may be used to manage communications with the wireless power outlet 20 as well as with other units as required.

The modulator 34 may be used to encode data of power control signals into the in-band communication channels, such as by modulating power carrying signals or the like. The receiver side out-of-band transceiver 38 may communicate with a corresponding outlet-side out-of-band transceiver 29.

The over voltage protection mechanism (OVP) 37 of the wireless power receiver 30 may be activated when output power measured at the terminals of the power receiver unit or the rectifier exceeds a threshold value. The OVP may include, for example, a clamping capacitor selectively connectable in parallel with an inductor coil of the power receiver unit 31, and a switching unit such as a MOSFET having a gate terminal wired to a trigger comparator operable to trigger the MOSFET when the threshold voltage is reached.

Accordingly, the over voltage protection (OVP) detection mechanism 28 of the wireless power outlet 20 may be operable to detect the over voltage protection mechanism being activated in the wireless power receiver.

It is noted that the frequency driver 23 of the wireless power outlet 20 may be operable to transmit multiple ping signals comprising bursts of transmitted power at various energy levels. The multiple ping signals may be used to initiate coupling of the wireless power receiver 30 and the wireless power transmitter 20 and include at least a higher energy first-type ping signal and a lower energy second-type ping signal. Accordingly the frequency driver 23 may be operable to generate the first-type ping signal and then, if the OVP detection mechanism 28 detects that the OVP 37 is activated, to generate a second-type ping signal. Similarly, a lower energy third-type ping signal may be generated if the OVP detector 28 again indicates that the OVP has been activated. The cycle may be repeated with further ping signals being generated at lower and lower energy levels.

Various wireless power transfer systems may implement such an OVP detector. These include loosely coupled systems such as resonant power transfer systems operating at resonant frequency of the resonance circuits. Alternatively the wireless power transfer system may include a tightly coupled system such as inductive power transfer systems operating at non-resonant frequency.

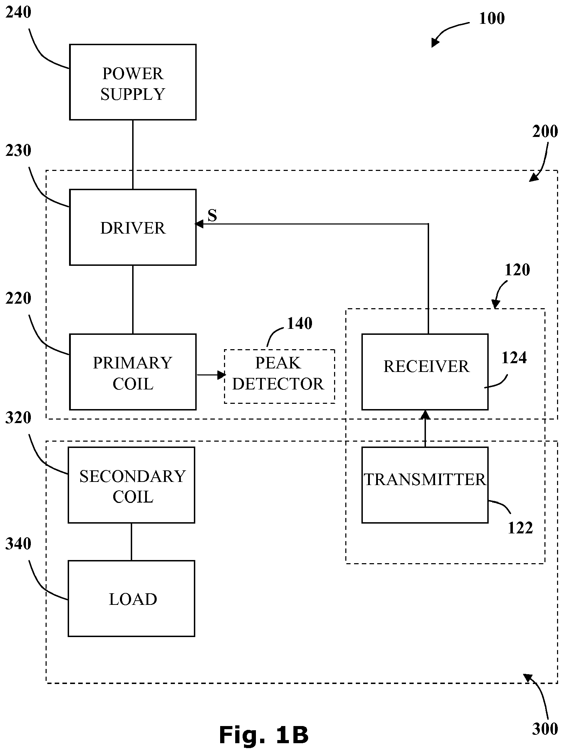

By way of example, reference is now made to Fig. 1B showing a block diagram of the main elements of a particular wireless power transfer system comprising an inductive power transfer system 100 adapted to transmit power at a non-resonant frequency according to one embodiment. The inductive power transfer system 100 consists of an inductive power outlet 200 configured to provide power to a remote secondary unit 300. The inductive power outlet 200 includes a primary inductive coil 220 wired to a power source 240 via a driver 230. The driver 230 is configured to provide an oscillating driving voltage to the primary inductive coil 220.

The secondary unit 300 includes a secondary inductive coil 320, wired to an electric load 340, which is inductively coupled to the primary inductive coil 220. The electric load 340 draws power from the power source 240. A communication channel 120 may be provided between a transmitter 122 associated with the secondary unit 300 and a receiver 124 associated with the inductive power outlet 200. The communication channel 120 may provide feedback signals S and the like to the driver 230.

In some embodiments, a voltage peak detector 140 is provided to detect large increases in the transmission voltage. As descried in the applicants co-pending applications incorporated herein the peak detector 140 may be used to detect irregularities such as the removal of the secondary unit 200, the introduction of power drains, short circuits or the like.

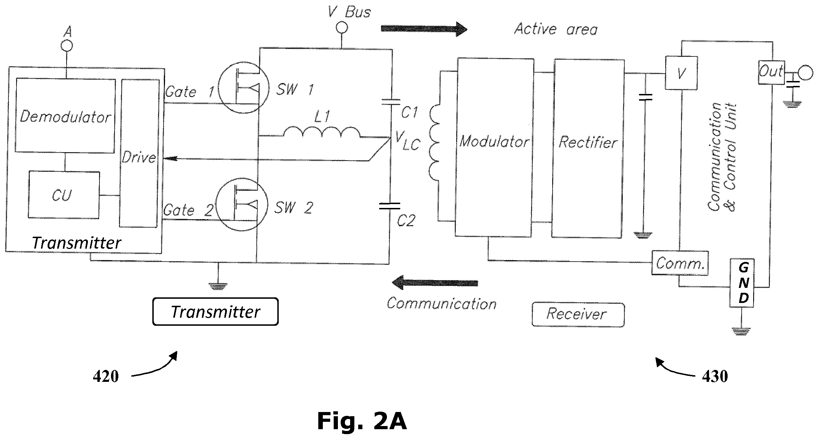

Referring now to Fig. 2A a configuration of selected components of a particular wireless power transfer system is illustrated. The wireless power receiver 430 regulates the output voltage and controls the received power by modulating the power signal according to a suitable communication protocol. The wireless power transmitter 420 (also referred to as an outlet) demodulates signals and may adjust the delivered power for example by changing the operating frequency of transmission, duty cycle, amplitude or the like as well as combinations thereof.

By controlling the a transmission parameter such as the operation frequency of transmission, delivered power from the transmitter to the receiver can be increased and decreased

The amount of power transferred is controlled by sending feedback communication from the receiver to the transmitter (e.g., to increase or decrease power). The receiver communicates with the transmitter by changing the load seen by the transmitter. This load variation results in a change in the transmitter coil current, which is measured and interpreted by a processor in the charging surface. The wireless charging system uses frequency-based signaling. It also includes identification and end of charging signals.

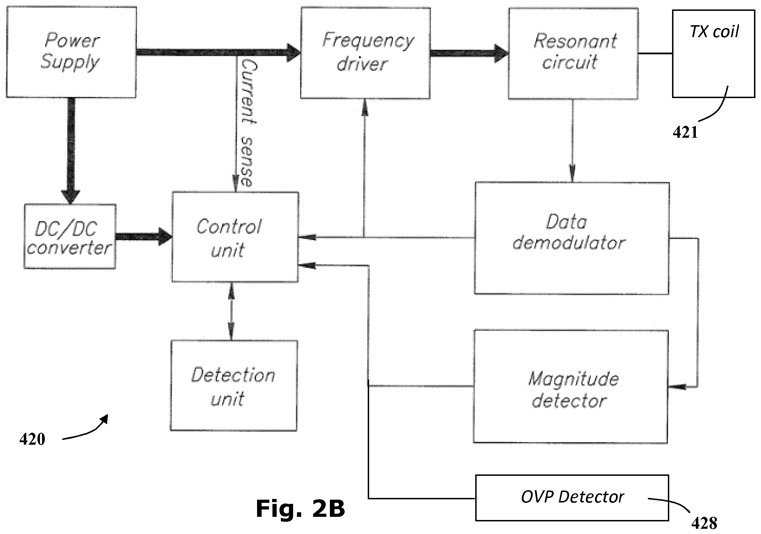

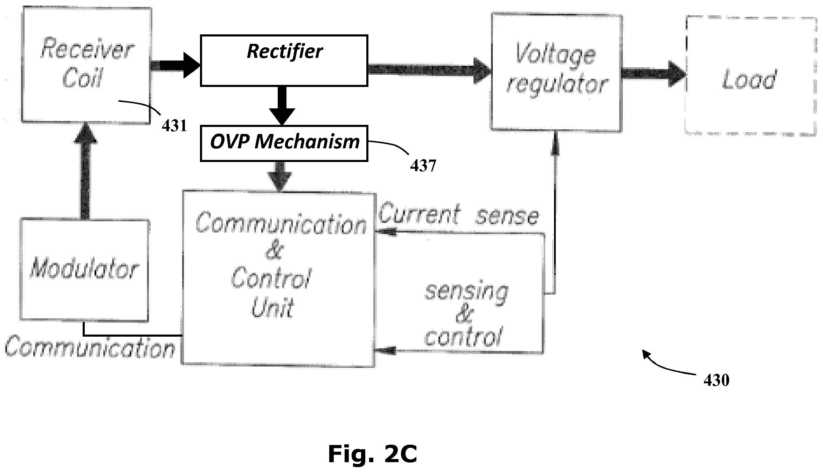

Fig. 2B illustrates a non-limiting example how the various components may be combined with an OVP detector 428 in the wireless power transmitter 420. Fig. 2C illustrates a non-limiting example of how these blocks may be combined with an OVP mechanism 437 in the wireless power receiver 430.

The wireless power transmitter 420 may be configured to deliver output of say 9 watts. However, the actual power output of the wireless power receiver 430 would depend on the alignment of power transmitter unit 421 and the power receiver unit 431 and the efficiency of the specific receiver design. Accordingly, the wireless power receiver 430 may receive more power than intended and this may trigger the OVP mechanism 437 therein.

It is noted that activation of the OVP mechanism 437 may be detected by OVP detector 428.

Various OVP detectors may be used. Where appropriate, the wireless power outlet detects that the wireless power receiver has activated the over voltage protection mechanism by an over voltage protection (OVP) detection mechanism detecting a characteristic variation in at least one transmission parameter during transmission of the first-type ping signal. The transmission parameter may be any of: amplitude of a primary voltage signal across a primary coil of the wireless power outlet; amplitude of a primary current signal through the primary coil; phase difference between the primary voltage signal and the primary current signal; voltage; and a temperature increase associated with the wireless power receiver.

Other OVP detectors detect that the wireless power receiver has activated the over voltage protection mechanism by identifying a periodic interference on a primary coil of the wireless power outlet.

It is further noted that multiple outlets are connected to a common controller, for example via the cloud such as described for example in the applicants co-pending application US publication number 20160006264, which is incorporated herein by reference in its entirety. Where such as multiple outlet system is used, the OVP detectors may be configured to communicate with the common controller thereby register multiple occurrences of the OVP being activated, these occurrences may be aggregated to improve detection and such improvements maybe communicated to the multiple outlets by the common controller as appropriate.

In still other systems, the wireless power receiver may send an out of band signal after it activates the over voltage protection mechanism. This signal may be a data signal sent to the wireless power outlet indicating that the voltage protection mechanism has been activated. The OVP detector may therefore use the out of band detector of the wireless power outlet, such as a BLE transceiver, microphone or the like, to detect the activation of the OVP.

Where appropriate, subsequent to the detecting that the wireless power receiver has activated the over voltage protection mechanism, the wireless power outlet may indicate that the wireless power receiver is misaligned. Additionally or alternatively, subsequent to the detecting that the wireless power receiver has activated the over voltage protection mechanism, the wireless power outlet indicating that a foreign object is disrupting power transfer.

Optionally, subsequent to the detecting that the wireless power receiver has activated the over voltage protection mechanism, the wireless power outlet may send an alert signal directly or indirectly to the wireless power receiver. Accordingly, the wireless power receiver may alter its power requirements in response to the alert signal.

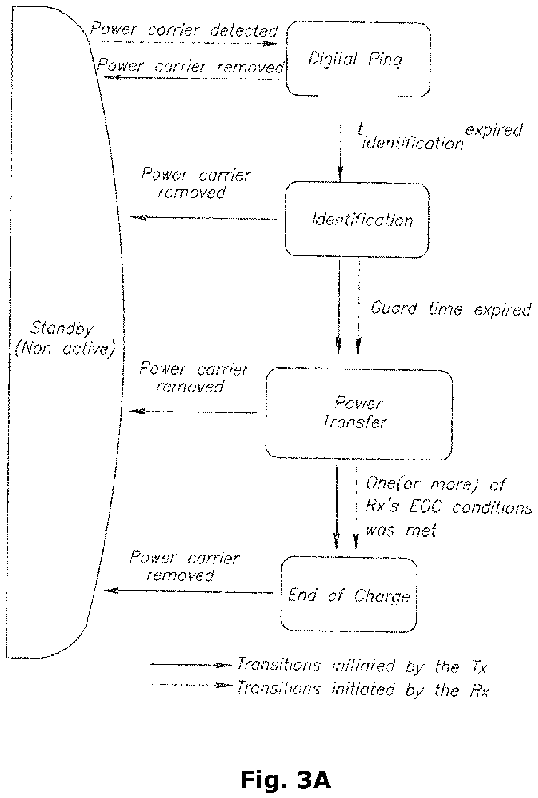

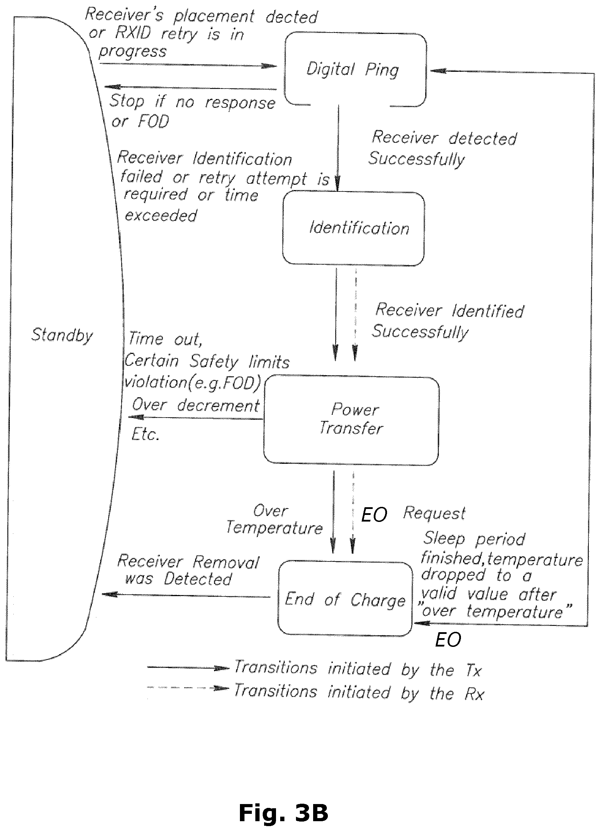

The wireless charging system can be in one of the following phases: Standby, Digital Ping, Identification, Power Transfer, and End of Charge (EOC). Fig. 3A illustrates the state machine for the wireless power outlet. Fig. 3B illustrates the corresponding state machine for the wireless power receiver. The state transitions are controlled by communication between the outlet and the receiver.

Referring particularly to Fig. 3A, transition between the Standby phase and Digital Ping phase is initiated by the activation of a detection mechanism which detects proximity of the wireless power receiver.

During the Standby phase, the outlet monitors its surface to detect a possible receiver's placement. There are a few methods that can be used to detect a possible placement of a receiver, e.g., monitoring the change in the magnetic field, monitoring the change in capacitance, and monitoring changes in the overall inductance of the system. In addition, two or more of the above may be used in combination, mutatis mutandis.

The system will continue to the Digital Ping phase if a possible placement of a receiver was detected using one of the above methods.

The purpose of the Digital Ping phase is to engage with a possible receiver and to identify that it is a valid receiver (and not a foreign object that creates, e.g., a parasitic current). To engage with a possible receiver, a Digital Ping is generated having a predefined structure regarding the frequencies and timing that should be used. If sufficient power is delivered to the receiver, it will respond by modulating the power signal according to the communication protocol used by the wireless charging system.

It is a particular feature of the disclosure that the system may employ multiple types of digital pings.

A first-type digital ping may be a standard ping operable to induce a rectified voltage in the receiver within the range of say 4 to 6 volts, which may be verified on a reference receiver (4.7µH) with no load and operation with coupling factor of 0.4. If no valid response from the receiver was received after a certain threshold number of attempts (where the threshold maybe dependent on the type of outlet), a second type of digital ping of lower energy may be generated, for example by limiting the frequency/voltage used in the fixed frequency sub phase such that the rectified voltage it induces on a reference receiver at full alignment is below 9V.

Accordingly, activation of the OVP of the wireless power receiver may be detected and receiver devices with high inductance and coupling and which activate their voltage protection circuit due to the first-type high energy digital ping lowest frequency may return to proper operational point. The wireless power outlet may implement other dynamic mechanisms for detection of the OVP protection circuit activation, and selectively activate this digital ping in these cases. If no valid response from the receiver is yet received even on the second type of digital ping, a third-type of digital ping may be generated.

For example a non-resonant inductive power outlet that operates within a frequency range above the resonant frequency of the system may shift the operation frequency to a still higher frequency range. In some transmitters where a lower frequency range of less than 200kHz is used, the third type of digital ping may be transmitted at an operating frequency that is higher than 200kHz.

Once a valid response from the wireless power receiver is detected, the wireless power outlet may modify the frequency carrier to the frequency used for the standard ping fixed frequency stage.

If the transmitter receives a valid signal from the receiver, it will continue to the Identification phase, without removing the power signal. In case identification is not supported by the transmitter, it will continue to the Power Transfer phase.

The outlet may transition to the Standby phase from any of the states based on internal policy decisions.

If an EOC request was received from the receiver, the system will continue to the End of Charge phase. If no response was detected, the system will return to the Standby phase.

Each receiver will have a unique identification string, and upon completion of Digital Ping, it is required to identify itself to the transmitter to verify it is a fully compliant device. As part of this identification the receiver sends its identification string.

Transmitters that support the Identification phase validate the identification string. If the identification string is validated successfully, the system will continue to the Power Transfer phase. If the validation failed, or was not completed in time, the system phase would change to Standby.

In this phase, the transmitter will provide power to the receiver, by controlling the primary cell current according to the control data received from the receiver. In addition, the transmitter verifies that no violation of proper operation boundaries and safety limits occurred (e.g. foreign object detection).

If EOC request was received from the receiver, or the temperature exceeds the maximum defined value, the system removes the power signal and continues to the End of Charge phase. In any other case of violation (as specified above), the system will remove the power signal and returns to Standby phase. A new charging cycle will begin by simply removing the receiver from the surface and placing it again.

The transmitter shall enter the EOC phase if an End of Charge (EOC) request is received from the receiver (charging completed) or temperature readings in the transmitter exceeded the predefined range.

If the reason for entering this phase was an EOC request, the transmitter should remove the power carrier and wait for a period of tsleep (the typical tsleep depends of the type of transmitter, as defined below). After tsleep expires, the transmitter will continue to the Digital Ping phase to engage again with the receiver that is placed on the surface. The transmitter also monitors the surface for a possible removal of the receiver during the sleep time of the EOC phase. If a removal of the receiver was detected, the transmitter will return to the Standby phase.

If the reason for entering this phase was high temperature readings in the transmitter, the transmitter monitors the transmitter's temperature. If the temperature drops to a valid value, the transmitter will continue to the Digital Ping phase. The transmitter also monitors the surface for a possible removal of the receiver during this time. If a removal of the receiver is detected, the transmitter should return to the Standby phase.

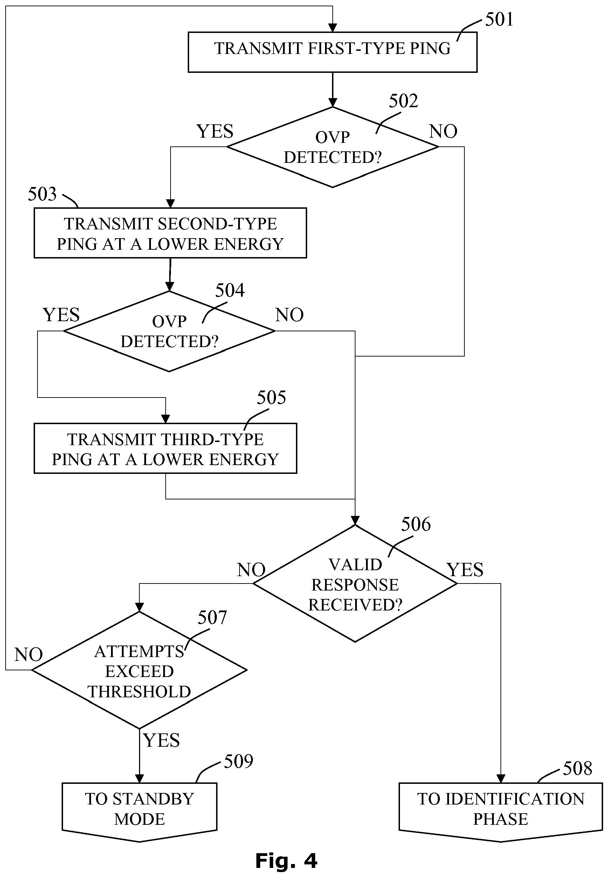

Referring now to Fig. 4, a flowchart is presented illustrating the digital ping phase for initiating transfer of power from the wireless power outlet to the wireless power receiver.

The wireless power outlet transmits a first-type ping signal 501 by generating a burst of oscillating voltage at a first energy level. If the wireless power outlet's OVP detector detects that the OVP mechanism has been activated 502, then a second-type ping signal is transmitted 503. If the wireless power outlet's OVP detector detects that the OVP mechanism has been activated 504, then a third-type ping signal is transmitted 505.

If, however, no OVP is detected and a valid response is received from the wireless power receiver, either after the first-type ping signal 501, the second-type ping signal 503 or the third-type ping signal 505, then the wireless power outlet may transition to the identification phase 508.

If, however no valid response is received after a threshold number of attempts, then the wireless power outlet may transition back to the standby phase 509.

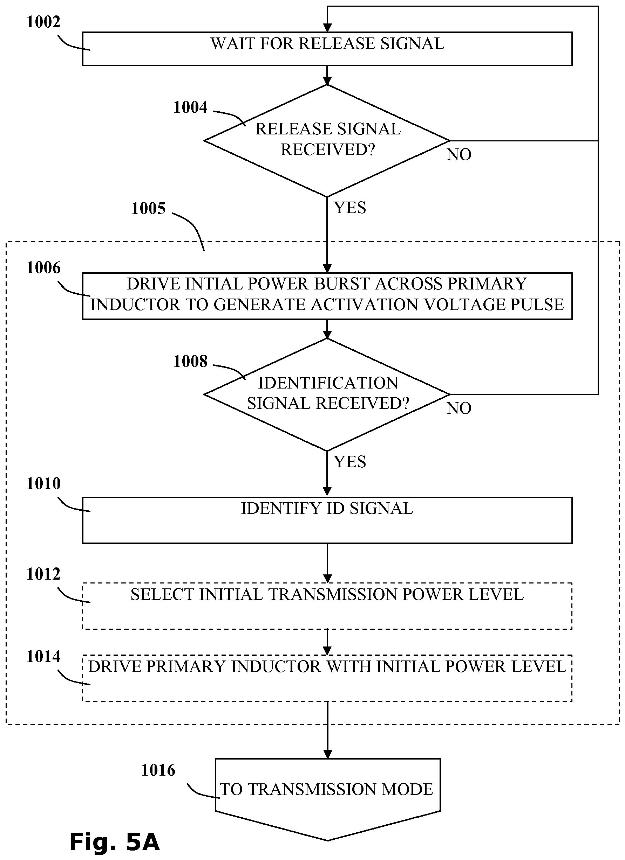

Reference is now made to Fig. 5A showing selected stages of another possible protocol for transition from standby phase to the transmission phase in the inductive power outlet. In standby phase, the dormant inductive power outlet waits for a release signal 1002.

The release signal indicates to the inductive power outlet that a compatible inductive power receiver may have been brought within transmission range. Such a release signal may be inter alia a change in local magnetic field associated with a trigger magnet in the inductive power receiver. Accordingly in one embodiment the inductive power outlet incorporates a Hall switch which is configured to detect changes in the local magnetic field. Other release signal mechanisms will occur to those skilled in the art such as signals detectable using piezoelectric elements, light sensors, audio sensors, reception of out of band advertisement signals and the like as suit requirements.

If no release signal is received the outlet remains in standby mode 1004. When a release signal is detected by the outlet an authentication process 1005 is initiated during which the presence of the inductive power receiver is confirmed. The authentication process may start by the driver of the primary inductor producing an initial power of sufficient intensity to induce an activation voltage pulse across the secondary inductor of the inductive power receiver 1006. For example, a primary voltage may be driven across the primary inductor such that an activation voltage pulse of eight volts is induced across the secondary inductor.

The inductive power outlet may be operable to detect an ID signal in response to the initial power burst 1008. If the inductive power outlet receives an ID signal response from a recognized inductive power receiver, then the ID signal may be identified 1010 and the mode switched to transmission mode 1016. Optionally, depending upon the identity of the ID signal, an initial transmission power level may be selected 1012 according to what ID signal is received and the primary inductor driven with the initial transmission power level 1014. Alternatively, the initial transmission power level may be the transmission power level of the initial power burst.

Optionally, the initial power burst across the primary inductor may be repeated for a fixed number of iterations before the inductive power outlet reverts to standby mode. Variously, the driving voltage of the initial power burst may be constant or changing. According to one embodiment, the driver of the inductive power outlet may be operable to produce an initial 15 millisecond burst of oscillating voltage across which may repeated, say every 256 milliseconds or so. After five iterations or so, if no ID signal is received, the inductive power outlet may revert to standby mode.

Various ID signals may be used in embodiments of the present disclosure, for example, where the inductive power outlet includes a peak detector, as described hereinabove, a transmission circuit may be used to modulate the primary voltage across the primary inductor, or primary current drawn by the primary inductor, with peak pulses having characteristic frequencies which are identifiable as generated by recognized inductive power receivers. In one embodiment, ID signals may peak pulses having characteristic frequencies selected from 500 hertz, 1 kilohertz and 8 kilohertz. The selected characteristic frequency of the ID signal may provide further instructions to the inductive power outlet for example relating to required transmission parameters, user specific data, billing information or the like.

The power level of the induced voltage may be regulated by adjusting a variety of parameters of the driving voltage. For example, where non-resonant power transmission is used, such as described hereinabove, the power level may be determined by the selected operating frequency. Optionally, the initial voltage across the primary inductor may be steadily increased by decreasing the driving frequency from 476 kilohertz to 313 kilohertz during the initial burst. Alternatively, a the power level may be selected by adjusting the duty cycle or amplitude of the driving voltage.

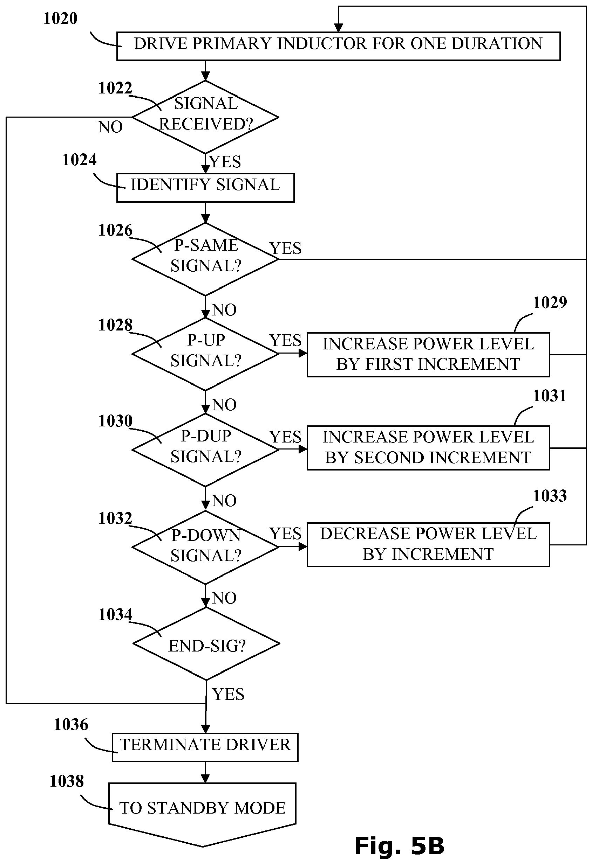

Reference is now made to Fig. 5B representing a possible transmission mode protocol for use with an inductive power outlet. Optionally, such a protocol may be initiated by the transition protocol of Fig. 5A, alternatively an inductive power outlet may be activated in other ways, such as by manually operating a power switch, connecting to a mains power supply or the like.

In transmission mode, the inductive power outlet may be operable to drive the primary inductor for a limited time duration 1020, for example for 10 milliseconds or so. At the end of the limited time duration, the outlet may be operable to terminate the operation 1036 unless an instruction signal is received 1022. Such a system may enable an energy efficient inductive power outlet to draw power only when required and to shut down when not needed. If an instruction signal is received from the inductive power receiver, the signal may be identified 1024 and acted upon, for example, as follows:
- if a perpetuation signal P-SAME is received from the inductive power receiver 1026, then the driver may continue to drive the primary inductor for a further duration;
- if a first power increase signal P-UP is received from the inductive power receiver 1028, then the driver may increase the power level by a first incremental value 1029;
- if a second power increase signal P-DUP is received from the inductive power receiver 1030, then the driver may increase the power level by a second incremental value 1031;
- if a power decrease signal P-DOWN is received from the inductive power receiver 1032, then the driver may decrease the power level by an incremental value 1033; or
- if a termination signal END-SIG is received from the inductive power receiver 1034, then the driver may be terminated 1036, thereby ceasing to drive the primary inductor and the inductive power outlet reverting to standby mode.

To better explain the transmission protocol and for illustrative purposes only, an example of the protocol is described below in in which the inductive power outlet drives a non-resonant transmission voltage. The protocol may also be applicable to resonant transmission systems.

The instruction signals may comprise modulated peak pulses with each signal having a characteristic frequency. In one particular embodiment the perpetuation signal P-SAME may have a characteristic frequency of 500 hertz, the first power increase signal P-UP may have a characteristic frequency of 8 kilohertz, the second power increase signal P-DUP may have a characteristic frequency of between 1.5 and 5 kilohertz, the termination signal END-SIG may have a characteristic frequency of 250 hertz. It will be appreciated that other characteristic frequencies may alternatively be used. Indeed, where required, other instruction signals, such as additional power decrease signal, for example, may be additionally or alternatively transferred as suit requirements.

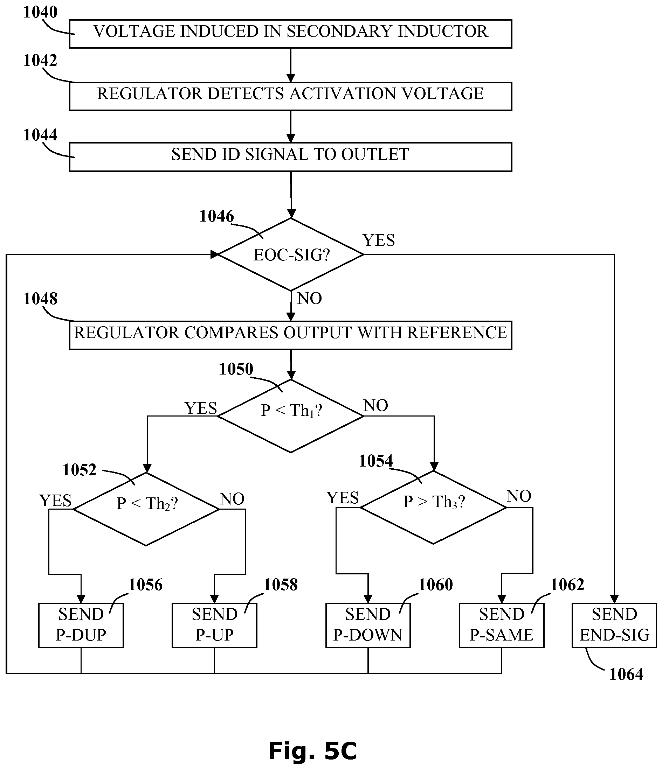

Turning now to the inductive power receiver, reference is made to Fig. 5C showing possible operational steps during inductive power reception. The inductive power receiver may be activated when a voltage is induced across the secondary inductor 1040, when the regulator may detect the activation voltage 1042 an identification signal may be sent to the inductive power outlet 1044.

Such an identification signal (ID signal) may serve to switch the inductive power transmitter to transmission mode as described above in relation to Fig. 5A. For example, an induced voltage of about 8V and producing a current of about 3 milliamps and lasting about 5 milliseconds or so, may power a microcontroller associated with the regulator to activate the sending of an ID signal to the inductive power outlet. In one embodiment, a transmission circuit may be used to produce a modulated peak pulse having a characteristic frequency selected from 500 hertz, 1 kilohertz, 8 kilohertz or the like. Variously, the inductive power receiver may select an ID signal such that predetermined transmission parameters may be selected for operating the inductive power outlet.

It is noted that during power transfer, the inductive power receiver is operable to periodically send instruction signals to the inductive power outlet. The instruction signals may be selected according to various factors as outlined below.

Where, the inductive power receiver is operable to detect an end-of-charge command EOC-SIG indicating that the electric load, such as an electrochemical cell or the like, requires no more power 1046. If such an end-of-charge command is detected, the inductive power receiver may be operable to send a termination signal END-SIG to the inductive power transmitter 1064. As outlined above in relation to Fig. 11B, the termination signal instruct the inductive power outlet to revert to standby mode. According to one embodiment, the termination signal may comprise a modulated peak pulse having a characteristic frequency of 250 hertz. It will be appreciated that such a termination mechanism may enable an energy efficient inductive power transfer system to draw power only when required and to shut down when not needed thereby reducing energy wastage.

If no end-of-charge command is detected, the regulator may be configured to compare the output of the secondary inductor to at least one reference value 1048. For example, the regulator may compare secondary voltage to reference values stored in a memory element. Alternatively, reference values may be calculated by a processor associated with the inductive power receiver to suit requirements.

If the power is below a first lower threshold value Th1 1050, a first power increase signal P-UP may be sent to the inductive power outlet 1058. The regulator may further compare the power to a second threshold value Th2 1052, if the power is also lower than the second threshold value Th2 a second power increase signal P-DUP may be sent to the inductive power outlet 1056.

Where the power is above the first lower threshold value, the power may be compared to at least one an upper threshold value Th3 1054. If the power level is greater than the upper threshold value Th3, then a power decrease signal P-DOWN may be sent to the inductive power outlet 1060.

It is particularly noted that where the power level is neither greater than the upper threshold value Th3 nor lower than the lower threshold value Th1, then a perpetuation signal P-SAME may be sent to the inductive power outlet 1062. Thus when even when no action is required a signal is sent at least one instruction signal may be sent to the inductive power outlet during each time duration. Accordingly, the inductive power receiver may periodically indicate its continued presence to the inductive power outlet. It will be appreciated that when the inductive power receiver is removed from the inducitive power outlet, no instruction signals will be passed therebetween. As indicated above in relation to Fig. 11B, the inductive power outlet may be configured to shut down when no such signal is received.

Although only five instruction signals are described hereinabove, other instruction signals may be additionally be transferred as required. Various instructions may occur to those skilled in the art, for example indicating that the power is outside still further threshold values, requesting greater power resolution or such like.

Additionally or alternatively, the transmission circuit 1122 (Fig. 10A) may be used to send digitally encoded data from the inductive power receiver 1300 to the inductive power transmitter 1200 via the inductive couple formed between the secondary inductor 1320 and the primary inductor 1220. Accordingly, the transmission circuit 1122 may be operable to generate a data transfer signal which may used to send a digital communication.

Such digital communications may carry information relating to various factors such as operational data, supplementary data, identification data or the like. For example, operation data may include load characteristics, load identity, desired operating parameters, actual operating parameters or target operating parameters, such as induced voltage, induced current, required current, operating temperature, charge level, or such like. Supplementary data may include location data, synchronization of data, media files say, streamed media or the like.

Where appropriate, such digital communications may be used to provide additional power transfer management. For example, the digital communications may be used to communicate inter alia data relating to:
- the resonant frequency of the system,
- the selected range of operational frequencies,
- the sizes of increment values of frequency or power by which the driver changes the power level when a P-UP signal, P-DOWN signal, P-DUP signal or the like is received,
- load or receiver specific maximum power levels,
- limits above which the inductive power transmitter should not transmit power,
- power limiting for safety,
- etc...

It is particularly noted that the digital communication may be used to pass identification data between the inductive power receiver and the inductive power outlet. Identification data may include, for example, a device specific identity code, a user specific identity code, a receiver specific identity code or the like. Such identification codes may be used to pair a specific inductive outlet to a specific inductive receiver. It is noted that identification codes may be of particular utility in commercial systems where the identity of the user or receiver may be used to determine the permissions of that receiver to draw power from that outlet, to determine billing procedure for that power drawing action, to monitor the behavior of a particular user or receiver or the like.

It is further noted that identification of the receiver may be used to determine user specific actions such as adjusting local environment. For example in a vehicle based system a inductive transmitter may use identification data received from an inductive power receiver to adjust the mirror, seat orientation, seat temperature, air conditioning, radio selections and the like to suit the personal preferences of the user. In another example, in a household environment the inductive transmitter may use identification data to cancel alarms, adjust the ambience, lighting, media preferences or the like to suit the user.

Furthermore, identification data may be used for billing purposes or may be used to determine personalized advertising targeted to the user.

Digital communications may be transmitted using the signal transfer system of the disclosure. It will be appreciated that digital communications may be constructed from multiple bits of information each of which may have a logic state 0 or a logic state 1.

The signal transfer system described herein may assign logic state peak pulses having differing characteristic frequencies to represent logic state 0 and logic state 1 and therewith to construct digital data. By way of example a logic state peak pulse may be assigned a characteristic frequency such as 2 kilohertz, 4 kilohertz, 5 kilohertz, 6 kilohertz, 10 kilohertz, 50 kilohertz or the like.

Optionally, a dedicated characteristic frequency peak pulse may be reserved for a logic state peak pulse. Alternatively, where required, a logic state peak pulse may share a characteristic frequency with one or more instruction signals.

It will be appreciated that communications, or messages, may be constructed from multiple bits. Strings of bits may represent bytes of information. Where appropriate, a byte may be characterized as a string of 10 bits: a BitST, Bit0, Bit1, Bit2, Bit3, Bit4, Bit5, Bit6, Bit7 and BitSP. The initial bit BitST may be a START bit used to indicate that the following string of eight bits represent a byte and BitSP may be a STOP bit used to indicate that the byte has terminated. According to a particular example BitST may set to logic state 0 to indicate initiation of a byte of data and BitSP may be set to logic state 1 to indicate the byte's termination.

The processor associated with the peak detector 1128 of the inductive power outlet 1200, may be operable to interpret peak pulses of various characteristic frequencies differently depending upon the timing of the transmission and the operational phase during which it is transmitted.

For example a peak pulse having a certain characteristic frequency which is used as an instruction signal during power transmission, such as described above, may be used as a logic state pulse signal otherwise. Accordingly, in a non-limiting example, during an initial identification phase, a peak pulse having the characteristic frequency of an ID signal may be used to represent logic state 0 and a peak pulse having the characateristic frequency of the P-SAME, say, signal may be used to represent logic state 1. Whereas during transmission phase P-SAME may be used to instruct the driver to continue to drive the primary inductor.

It is further noted that during transmission, one logical state may be represented by an unambiguous characteristic frequency and the other logical state may be represented by any one of a set of other characteristic frequencies.

For example, logic state 0 may be represented by its own characteristic frequency MsgBIT, say 6 kilohertz. By contrast, logic state 1 may not have its own unique characteristic frequency. Instead, any of the other characteristic frequencies may be interpreted as representing logic state 1 by the processor 1129 associated with the peak detector 1128 of the inductive power outlet 1200.

It is noted that, where multiple characteristic frequencies are all interpreted as the same logical state, the selection of the characteristic frequencies used may convey another level of information concurrently with the digital message. Thus, for example, during transmission, a digital message may be communicated using the MsgBIT frequency to represent logic state 0 while selection of the characteristic frequency for logic state 1 may be determined by the transmission requirement of the system at that instant. Accordingly, in the example:
- if the power received by the inductive receiver is below a required level, the power increase signal P-UP may be used to represent logic state 1, such that the driver also increases the power level by an incremental value,
- if the power received by the inductive receiver is above a required level, the power decrease signal P-DOWN may be used to represent logic state 1, such that the driver also decreases the power level by an incremental value,
- if the power received by the inductive receiver is within a required range, the perpetuation signal P-SAME may be used to represent logic state 1, such that the driver continue to drive the primary inductor with the same power level, and
- if the load requires no more power, the termination signal END-SIG may be used to represent logic state 1, such that the driver ceases to drive the primary inductor and the inductive power outlet reverts to standby mode.

Accordingly, it is a particular feature of the present disclosure that digital communications may be transferred from the inductive receiver to the inductive outlet concurrently with power transmission regulation signals.

It is also noted that the digital communication may be used to provide a digital ping. Optionally, a digital ping phase may be used to identify that the receiver is valid for example. In order to engage with a possible receiver, a digital ping is generated. This digital ping may have a pre-defined structure regarding the frequencies and timing that should be used. If sufficient power is delivered to the refceiver, it will respond by modulating the power signal according to the communication protocol. Where the transmitter received a valid signal from the receiver, it may continue to an identification phase without removing the power signal or a power transfer phase.

Optionally, inductive power receivers may have characteristic identification codes MACID which may be communicated in an ID signal RXID, accordingly, the receiver may be operable to identify itself to the inductive power outlet by sending the identification code MACID in the ID signal RXID.

According to one example protocol, where the receiver responds to the digital ping, the receiver may transmit a characteristic frequency peak pulse, say the P-SAME signal. The receiver may be operable to transmit such a signal within a milisecond after entering the ping phase and may continue transmitting this signal for an identification period tID before continuing to an identification phase. Optionally, entry to the digital ping phase on the receiver may be considered as the point where the bridge voltage of the Receiver reaches an initial rectified voltage Vstart required to bring the communication and control unit to an active state.

Where appropriate, the RXID message structure may comprise a string of bytes such as described herein. The byte string may comprise a preamble byte, a message ID byte, the MACID, which may itself comprise a string of six bytes, and a two byte cyclic redundancy check (CRC). Optionally, in a particular embodiment, the Preamble byte is fixed to 0x00 and the Message ID byte is set to 0xAA. It will be appreciated that other messages may be defined as suit requirements. Optionally, where required, a Certification-Version byte may be included possibly between the messageID byte and the MACID field.

According to a particular embodiment, the receiver may use the following flow of operation: On the completion of the Digital Ping phase, prior to enabling charging to the device, the receiver may transmit a "RXID message", to make sure it is a fully compliant device. A guard-time of 20 miliseconds is provided, during which the transmitter calculates the CRC of the RXID message and the receiver transmits P-SAME signals. Once the guard time is over, the receiver may enter a power transfer phase.

The inductive power outlet may receive the RXID message and calculate the CRC, while maintaining the power level stable. If the CRC is valid, the inductive power transmitter will move to power transfer phase. If the CRC was not valid, the inductive power transmitter will remove the power carrier and transition to the standby phase. It may then restart the Digital Ping phase with the receiver and repeat the identifications attempt.

By way of illustration selected features and parameters of a particular embodiment of a wireless charging system is described hereinbelow comprising a charging surface (transmitter, TX) and the secondary-side equipment (receiver, RX). The coils in the charging surface and in the secondary equipment are magnetically coupled to each other when a portable device (that contains the receiver) is placed on the charging surface. Power is then transferred from the transmitter to the receiver via coupled inductors (e.g. an air-core transformer).

Technical and scientific terms used herein should have the same meaning as commonly understood by one of ordinary skill in the art to which the disclosure pertains. Nevertheless, it is expected that during the life of a patent maturing from this application many relevant systems and methods will be developed. Accordingly, the scope of the terms such as computing unit, network, display, memory, server and the like are intended to include all such new technologies a priori.

As used herein the term "about" refers to at least 10 %.

The terms "comprises", "comprising", "includes", "including", "having" and their conjugates mean "including but not limited to" and indicate that the components listed are included, but not generally to the exclusion of other components. Such terms encompass the terms "consisting of' and "consisting essentially of".

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" may include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween. It should be understood, therefore, that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6 as well as non-integral intermediate values. This applies regardless of the breadth of the range.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present disclosure. To the extent that section headings are used, they should not be construed as necessarily limiting.

The scope of the disclosed subject matter is defined by the appended claims and includes both combinations and sub combinations of the various features described hereinabove as well as variations and modifications thereof, which would occur to persons skilled in the art upon reading the foregoing description.

## Claims

1. Method for monitoring transferred power from a wireless power outlet (20) to a wireless power receiver (30), **characterized in that**
said wireless power outlet (20) transmits a first-type ping signal (501);
said wireless power receiver (30) receives said first-type ping signal;
said first-type ping signal (501) induces a receiver voltage at said wireless power receiver (30);
said wireless power receiver (30) activates an over voltage protection mechanism (37) upon reaching a voltage threshold value; and
said wireless power outlet (20) detects that said wireless power receiver (30) has activated said voltage protection mechanism by detecting characteristics variation (502) during transmission of the first-type ping signal (501) by said wireless power outlet (20) in order to determine if said wireless power receiver (30) has activated said voltage protection mechanism (37).

2. Method of claim 1 further comprising, subsequent to said detecting that said wireless power receiver (30) has activated said over voltage protection mechanism (37), said wireless power outlet (20) transmitting a second-type ping signal (503).

3. Method of claim 2 wherein said second-type ping signal (503) is a lower energy signal than said first-type ping signal (501).

4. Method of claim 2 or 3, wherein said wireless power outlet (20) transmitting said first-type ping signal (501) comprises a frequency generator (23) providing a driving voltage across a primary coil (220) of said wireless power outlet at a first operating frequency; and said wireless power outlet transmitting a second-type ping signal (503) comprises said frequency generator providing a driving voltage across said primary coil of said wireless power outlet at a second operating frequency.

5. Method of one of claims 2 to 4, wherein said wireless power outlet (20) transmitting said first-type ping signal (501) comprises providing a driving voltage across a primary coil of said wireless power outlet at a first amplitude; and said wireless power outlet (20) transmitting a second-type ping signal (503) comprises providing a driving voltage across said primary coil of said wireless power outlet at a second amplitude.

6. Method of one of claims 2 to 5, wherein said wireless power outlet (20) transmitting said first-type ping signal (501) comprises providing a driving voltage across a primary coil of said wireless power outlet with a first duty cycle; and said wireless power outlet (20) transmitting a second-type ping signal (503) comprises providing a driving voltage across said primary coil of said wireless power outlet with a second duty cycle.

7. Method of one of claims 1 to 6, wherein said wireless power outlet (20) transmitting said first-type ping signal (501) comprises a frequency generator providing a driving voltage across a primary coil of said wireless power outlet.

8. Method of one of claims 1 to 7, wherein said wireless power outlet (20) detecting that said wireless power receiver (30) has activated said over voltage protection mechanism comprises an OVP detection mechanism (28) detecting a characteristic variation in at least one transmission parameter during transmission of said first-type ping signal.

9. Method of claim 8 wherein said at least one transmission parameter is selected from a group comprising of: amplitude of a primary voltage signal across a primary coil of said wireless power outlet; amplitude of a primary current signal through said primary coil; phase difference between said primary voltage signal and said primary current signal; voltage; and a temperature increase associated with said wireless power receiver.

10. Method of one of claims 1 to 9, wherein said wireless power outlet (20) detecting that said wireless power receiver has activated said over voltage protection circuit mechanism comprises an OVP detection (28) mechanism detecting a periodic interference on a primary coil of said wireless power outlet.

11. Method of one of claims 1 to 10, further comprising, subsequent to said wireless power receiver (30) activating said over voltage protection mechanism, at least one of the following: said wireless power receiver sending a data signal to said wireless power outlet indicating that said voltage protection mechanism has been activated; and/or said wireless power outlet indicating that said wireless power receiver is misaligned; and/or said wireless power outlet indicating that a foreign object is disrupting power transfer; and/or said wireless power outlet sending an alert signal to said wireless power receiver.

12. Method of claim 11 further comprising said wireless power receiver (30) altering its power requirements in response to said alert signal.

13. Control circuit for a wireless power outlet (20) configured to transfer power to a wireless power receiver (30), said control circuit comprising:
a frequency driver (23) operable to provide a driving voltage across a primary coil of said wireless power outlet (20), said driving voltage oscillating at an operating frequency;
**characterized by**
an OVP detection mechanism (27, 28)operable to detect an over voltage protection mechanism (37) being activated in said wireless power receiver (30) in response to a first-type ping signal (501) by detecting characteristics variation (502) during transmission of the first-type ping signal (501) by said wireless power outlet (20) in order to determine if said wireless power receiver (30) has activated said voltage protection mechanism (37).

14. Control circuit of claim 13, wherein said frequency driver is operable to transmit at least a first-type ping signal (501) and a second-type ping signal (503) at a lower energy than said first-type ping signal (501).

15. Control circuit of claim 13 or 14, wherein said frequency driver is operable to transmit said second-type ping signal when said OVP detection mechanism detects that said over voltage protection mechanism is activated in said wireless power receiver during transmission of said first-type ping signal; and wherein optionally said OVP detection mechanism comprises a magnitude detector (25) operable to monitor at least one transmission parameter of said first type ping signal and/or a data signal receiver operable to receive data signals sent from said wireless power receiver.

## Patentansprüche

1. Verfahren zur Überwachung der von einer drahtlosen Energiequelle (20) zu einem drahtlosen Energieempfänger (30) übertragenen Leistung, **dadurch gekennzeichnet, dass**
die drahtlose Energiequelle (20) ein Ping-Signal einer ersten Art (501) sendet; der drahtlose Energieempfänger (30) das Ping-Signal der ersten Art empfängt; das Ping-Signal der ersten Art (501) an dem drahtlosen Energieempfänger (30) eine Empfängerspannung induziert;
der drahtlose Energieempfänger (30) beim Erreichen eines Spannungsschwellenwerts einen Überspannungsschutzmechanismus (37) aktiviert; und
die drahtlose Energiequelle (20) erkennt, dass der drahtlose Energieempfänger (30) den Spannungsschutzmechanismus aktiviert hat, indem sie während des Sendens des Ping-Signals der ersten Art (501) durch die drahtlose Energiequelle (20) eine Verhaltensveränderung (502) erkennt, um zu bestimmen, ob der drahtlose Energieempfänger (30) den Spannungsschutzmechanismus (37) aktiviert hat.

2. Verfahren nach Anspruch 1, das nach dem Erkennen, dass der drahtlose Energieempfänger (30) den Überspannungsschutzmechanismus (37) aktiviert hat, ferner umfasst, dass die drahtlose Energiequelle (20) ein Ping-Signal einer zweiten Art (503) sendet.

3. Verfahren nach Anspruch 2, wobei das Ping-Signal der zweiten Art (503) ein Signal mit niedrigerer Energie ist als das Ping-Signal der ersten Art (501).

4. Verfahren nach Anspruch 2 oder 3, wobei die drahtlose Energiequelle (20) beim Senden des Ping-Signals der ersten Art (501) umfasst, dass ein Frequenzgenerator (23) über einer Primärspule (220) der drahtlosen Energiequelle eine Ansteuerspannung mit einer ersten Betriebsfrequenz bereitstellt; und die drahtlose Energiequelle beim Senden eines Ping-Signals einer zweiten Art (503) umfasst, dass der Frequenzgenerator über der Primärspule der drahtlosen Energiequelle eine Ansteuerspannung mit einer zweiten Betriebsfrequenz bereitstellt.

5. Verfahren nach einem der Ansprüche 2 bis 4, wobei die drahtlose Energiequelle (20) beim Senden des Ping-Signals der ersten Art (501) ein Bereitstellen einer Ansteuerspannung über einer Primärspule der drahtlosen Energiequelle mit einer ersten Amplitude umfasst; und die drahtlose Energiequelle (20) beim Senden eines Ping-Signals einer zweiten Art (503) ein Bereitstellen einer Ansteuerspannung über der Primärspule der drahtlosen Energiequelle mit einer zweiten Amplitude umfasst.

6. Verfahren nach einem der Ansprüche 2 bis 5, wobei die drahtlose Energiequelle (20) beim Senden des Ping-Signals der ersten Art (501) ein Bereitstellen einer Ansteuerspannung über einer Primärspule der drahtlosen Energiequelle mit einem ersten Betriebszyklus umfasst; und die drahtlose Energiequelle (20) beim Senden eines Ping-Signals einer zweiten Art (503) ein Bereitstellen einer Ansteuerspannung über der Primärspule der drahtlosen Energiequelle mit einem zweiten Betriebszyklus umfasst.

7. Verfahren nach einem der Ansprüche 1 bis 6, wobei die drahtlose Energiequelle (20) beim Senden des Ping-Signals der ersten Art (501) umfasst, dass ein Frequenzgenerator eine Ansteuerspannung über einer Primärspule der drahtlosen Energiequelle bereitstellt.

8. Verfahren nach einem der Ansprüche 1 bis 7, wobei die drahtlose Energiequelle (20) beim Erkennen, dass der drahtlose Energieempfänger (30) den Überspannungsschutzmechanismus aktiviert hat, umfasst, dass ein ÜSS-Erkennungsmechanismus (28) während des Sendens des Ping-Signals der ersten Art eine charakteristische Veränderung wenigstens eines Sendeparameters erkennt.

9. Verfahren nach Anspruch 8, wobei der wenigstens eine Sendeparameter aus einer Gruppe ausgewählt wird, die Folgendes umfasst: Amplitude eines Primärspannungssignals über einer Primärspule der drahtlosen Energiequelle; Amplitude eines Primärstromsignals durch die Primärspule; Phasendifferenz zwischen dem Primärspannungssignal und dem Primärstromsignal; Spannung; und einen dem drahtlosen Energieempfänger zugeordneten Temperaturanstieg.

10. Verfahren nach einem der Ansprüche 1 bis 9, wobei die drahtlose Energiequelle (20) beim Erkennen, dass der drahtlose Energieempfänger den Überspannungsschutzschaltungsmechanismus aktiviert hat, umfasst, dass ein Mechanismus zur ÜSS-Erkennung (28) eine periodische Interferenz an einer Primärspule der drahtlosen Energiequelle erkennt.

11. Verfahren nach einem der Ansprüche 1 bis 10, das, nachdem der drahtlose Energieempfänger (30) den Überspannungsschutzmechanismus aktiviert, ferner wenigstens eines der Folgenden umfasst: dass der drahtlose Energieempfänger ein Datensignal an die drahtlose Energiequelle sendet, das angibt, dass der Spannungsschutzmechanismus aktiviert wurde; und/oder dass die drahtlose Energiequelle angibt, dass der drahtlose Energieempfänger fehlausgerichtet ist; und/oder dass die drahtlose Energiequelle angibt, dass ein Fremdkörper die Energieübertragung stört; und/oder dass die drahtlose Energiequelle ein Warnsignal an den drahtlosen Energieempfänger sendet.

12. Verfahren nach Anspruch 11, das ferner umfasst, dass der drahtlose Energieempfänger (30) seine Leistungsanforderungen in Reaktion auf das Warnsignal ändert.

13. Steuerschaltung für eine drahtlose Energiequelle (20), die dazu ausgestaltet ist, Energie zu einem drahtlosen Energieempfänger (30) zu übertragen, wobei die Steuerschaltung Folgendes umfasst:
einen Frequenztreiber (23), der dazu betriebsfähig ist, über einer Primärspule der drahtlosen Energiequelle (20) eine Ansteuerspannung bereitzustellen, wobei die Ansteuerspannung mit einer Betriebsfrequenz oszilliert;
**gekennzeichnet durch**
einen ÜSS-Erkennungsmechanismus (27, 28), der dazu betriebsfähig ist, in Reaktion auf ein Ping-Signal einer ersten Art (501) zu erkennen, dass ein Überspannungsschutzmechanismus (37) in dem drahtlosen Energieempfänger (30) aktiviert wird, indem er während eines Sendens des Ping-Signals der ersten Art (501) durch die drahtlose Energiequelle (20) eine Verhaltensveränderung (502) erkennt, um zu bestimmen, ob der drahtlose Energieempfänger (30) den Spannungsschutzmechanismus (37) aktiviert hat.

14. Steuerschaltung nach Anspruch 13, wobei der Frequenztreiber dazu betriebsfähig ist, wenigstens ein Ping-Signal einer ersten Art (501) und ein Ping-Signal einer zweiten Art (503) mit niedrigerer Energie als das Ping-Signal der ersten Art (501) zu senden.

15. Steuerschaltung nach Anspruch 13 oder 14, wobei der Frequenztreiber dazu betriebsfähig ist, das Ping-Signal der zweiten Art zu senden, wenn der ÜSS-Erkennungsmechanismus während des Sendens des Ping-Signals der ersten Art erkennt, dass der Überspannungsschutzmechanismus in dem drahtlosen Energieempfänger aktiviert wird; und wobei optional der ÜSS-Erkennungsmechanismus einen Größenordnungsdetektor (25), der dazu betriebsfähig ist, wenigstens einen Sendeparameter des Ping-Signals der ersten Art zu überwachen, und/oder einen Datensignalempfänger, der dazu betriebsfähig ist, von dem drahtlosen Energieempfänger gesendete Datensignale zu empfangen, umfasst.

## Revendications

1. Procédé pour surveiller une puissance transférée d'une sortie de puissance sans fil (20) à un récepteur de puissance sans fil (30), **caractérisé en ce que**
ladite sortie de puissance sans fil (20) transmet un signal ping de premier type (501) ;
ledit récepteur de puissance sans fil (30) reçoit ledit signal ping de premier type ;
ledit signal ping de premier type (501) induit une tension de récepteur au niveau dudit récepteur de puissance sans fil (30) ;
ledit récepteur de puissance sans fil (30) active un mécanisme de protection contre une surtension (37) au moment d'atteindre une valeur seuil de tension ; et
ladite sortie de puissance sans fil (20) détecte que ledit récepteur de puissance sans fil (30) a activé ledit mécanisme de protection contre une tension en détectant une variation de caractéristique (502) pendant la transmission du signal ping de premier type (501) par ladite sortie de puissance sans fil (20) afin de déterminer si ledit récepteur de puissance sans fil (30) a activé ledit mécanisme de protection contre une tension (37).

2. Procédé selon la revendication 1 comprenant en outre, à la suite de ladite détection que ledit récepteur de puissance sans fil (30) a activé ledit mécanisme de protection contre une surtension (37), ladite sortie de puissance sans fil (20) transmettant un signal ping de second type (503).

3. Procédé selon la revendication 2, dans lequel ledit signal ping de second type (503) est un signal à une énergie plus faible que celle dudit signal ping de premier type (501).

4. Procédé selon la revendication 2 ou 3, dans lequel ladite sortie de puissance sans fil (20) transmettant ledit signal ping de premier type (501) comprend un générateur de fréquences (23) fournissant une tension d'entraînement à travers une bobine primaire (220) de ladite sortie de puissance sans fil à une première fréquence opérationnelle ; et ladite sortie de puissance sans fil transmettant un signal ping de second type (503) comprend ledit générateur de fréquences fournissant une tension d'entraînement à travers ladite bobine primaire de ladite sortie de puissance sans fil à une seconde fréquence opérationnelle.

5. Procédé selon l'une des revendications 2 à 4, dans lequel ladite sortie de puissance sans fil (20) transmettant ledit signal ping de premier type (501) comprend la fourniture d'une tension d'entraînement à travers une bobine primaire de ladite sortie de puissance sans fil à une première amplitude ; et ladite sortie de puissance sans fil (20) transmettant un signal ping de second type (503) comprend la fourniture d'une tension d'entraînement à travers ladite bobine primaire de ladite sortie de puissance sans fil à une seconde amplitude.

6. Procédé selon l'une des revendications 2 à 5, dans lequel ladite sortie de puissance sans fil (20) transmettant ledit signal ping de premier type (501) comprend la fourniture d'une tension d'entraînement à travers une bobine primaire de ladite sortie de puissance sans fil avec un premier cycle de service ; et ladite sortie de puissance sans fil (20) transmettant un signal ping de second type (503) comprend la fourniture d'une tension d'entraînement à travers ladite bobine primaire de ladite sortie de puissance sans fil avec un second cycle de service.

7. Procédé selon l'une des revendications 1 à 6, dans lequel ladite sortie de puissance sans fil (20) transmettant ledit signal ping de premier type (501) comprend un générateur de fréquences fournissant une tension d'entraînement à travers une bobine primaire de ladite sortie de puissance sans fil.

8. Procédé selon l'une des revendications 1 à 7, dans lequel ladite sortie de puissance sans fil (20) détectant que ledit récepteur de puissance sans fil (30) a activé ledit mécanisme de protection contre une surtension comprend un mécanisme de détection d'OVP (28) détectant une variation de caractéristique dans au moins un paramètre de transmission pendant la transmission dudit signal ping de premier type.

9. Procédé selon la revendication 8, dans lequel ledit au moins un paramètre de transmission est sélectionné dans un groupe comprenant : l'amplitude d'un signal de tension primaire à travers une bobine primaire de ladite sortie de puissance sans fil ; l'amplitude d'un signal de courant primaire à travers ladite bobine primaire ; la différence de phase entre ledit signal de tension primaire et ledit signal de courant primaire ; la tension ; et une augmentation de température associée audit récepteur de puissance sans fil.

10. Procédé selon l'une des revendications 1 à 9, dans lequel ladite sortie de puissance sans fil (20) détectant que ledit récepteur de puissance sans fil a activé ledit mécanisme de circuit de protection contre une surtension comprend un mécanisme de détection d'OVP (28) détectant une interférence périodique sur une bobine primaire de ladite sortie de puissance sans fil.

11. Procédé selon l'une des revendications 1 à 10, comprenant en outre, à la suite dudit récepteur de puissance sans fil (30) activant ledit mécanisme de protection contre une surtension, au moins l'un des éléments suivants : ledit récepteur de puissance sans fil envoyant un signal de données à ladite sortie de puissance sans fil indiquant que ledit mécanisme de protection contre une tension a été activé ; et/ou ladite sortie de puissance sans fil indiquant que ledit récepteur de puissance sans fil est mal aligné ; et/ou ladite sortie de puissance sans fil indiquant qu'un objet étranger perturbe le transfert de puissance ; et/ou ladite sortie de puissance sans fil envoyant un signal d'alerte audit récepteur de puissance sans fil.

12. Procédé selon la revendication 11 comprenant en outre ledit récepteur de puissance sans fil (30) modifiant ses exigences de puissance en réponse audit signal d'alerte.

13. Circuit de commande pour une sortie de puissance sans fil (20) configuré pour transférer de la puissance à un récepteur de puissance sans fil (30), ledit circuit de commande comprenant :
un dispositif d'entraînement de fréquences (23) opérationnel pour fournir une tension d'entraînement à travers une bobine primaire de ladite sortie de puissance sans fil (20), ladite tension d'entraînement oscillant à une fréquence opérationnelle ;
**caractérisé par**
un mécanisme de détection d'OVP (27, 28) opérationnel pour détecter un mécanisme de protection contre une surtension (37) étant activé dans ledit récepteur de puissance sans fil (30) en réponse à un signal ping de premier type (501) en détectant une variation de caractéristique (502) pendant la transmission du signal ping de premier type (501) par ladite sortie de puissance sans fil (20) afin de déterminer si ledit récepteur de puissance sans fil (30) a activé ledit mécanisme de protection contre une surtension (37).

14. Circuit de commande selon la revendication 13, dans lequel ledit dispositif d'entraînement de fréquences est opérationnel pour transmettre au moins un signal ping de premier type (501) et un signal ping de second type (503) à une énergie plus faible que celle dudit signal ping de premier type (501).

15. Circuit de commande selon la revendication 13 ou 14, dans lequel ledit dispositif d'entraînement de fréquences est opérationnel pour transmettre ledit signal ping de second type lorsque ledit mécanisme de détection d'OVP détecte que ledit mécanisme de protection contre une surtension est activé dans ledit récepteur de puissance sans fil pendant la transmission dudit signal ping de premier type ; et dans lequel facultativement ledit mécanisme de détection d'OVP comprend un détecteur d'amplitudes (25) opérationnel pour surveiller au moins un paramètre de transmission dudit signal ping de premier type et/ou un récepteur de signaux de données opérationnel pour recevoir des signaux de données envoyés depuis ledit récepteur de puissance sans fil.
